# EUROPÄISCHE PATENTSCHRIFT

(11) **EP 2 829 353 B1**
(45) Veröffentlichungstag und Bekanntmachung des Hinweises auf die Patenterteilung: **11.09.2019**
(21) Anmeldenummer: 14000578.6
(22) Anmeldetag: 19.02.2014
(51) Int. Cl.: B23P 11/02, B24B 19/12, F01L 1/047, F16B 4/00, F16D 1/08, F16H 53/02, B23B 31/40, F16D 1/072

(54) **Verfahren zum Fertigen einer gebauten Nockenwelle und entsprechende Vorrichtung**
Method for producing an assembled camshaft and corresponding device
Procédé de fabrication d'un arbre à cames assemblé et dispositif correspondant

(30) Priorität: 25.07.2013 DE 102013012384
(43) Veröffentlichungstag der Anmeldung: 28.01.2015
(73) Patentinhaber: MAN Truck & Bus SE, 80995 München (DE)
(72) Erfinder: Boehme, Ulrich, 90455 Nürnberg (DE); Fink, Adrian, 90451 Nürnberg (DE)
(74) Vertreter: Liebl, Thomas

(56) Entgegenhaltungen:
- EP-A2- 0 269 100
- CN-A- 103 100 733
- DE-A1-102009 023 612
- DE-A1-102009 043 709
- DE-A1-102011 053 651
- JP-A- 2003 039 316
- US-A1- 2008 173 128
- DATABASE WPI Week 198718 15. September 1986 (1986-09-15) Thomson Scientific, London, GB; AN 1987-127837 XP002732849, -& SU 1 256 881 A2 (MAMONOV V M) 15. September 1986 (1986-09-15)

## Beschreibung

Die vorliegende Erfindung betrifft ein Verfahren zum Fertigen einer gebauten Nockenwelle, insbesondere für ventilgesteuerte Brennkraftmaschinen, sowie eine Vorrichtung, insbesondere zur Bearbeitung der Lauffläche von Nockenscheiben für gebaute Nockenwellen gemäß den Oberbegriffen der Ansprüche 1 und 6. Ferner betrifft die Erfindung eine Anwendung des Verfahrens mitsamt der Vorrichtung.

Die DE 10 2009 023612 A1 offenbart ein Verfahren bzw. eine Vorrichtung nach dem Oberbegriff des Anspruchs 1 bzw. 6.

Die US 2008/173128 A1 offenbart ein weiteres Verfahren zum Fertigen einer gebauten Nockenwelle und eine weitere Vorrichtung zur Bearbeitung der Lauffläche von Nockenscheiben für gebaute Nockenwelle.

Gebaute Nockenwellen haben insbesondere bei einer Serienfertigung den Vorteil, dass sie kostengünstiger herstellbar sind und bei Verwendung dünnwandiger Bauteile ein geringeres Gewicht aufweisen. Die Festlegung der Nockenscheiben auf der korrespondierenden Welle kann in bekannter Weise stoffschlüssig (zum Beispiel durch Schweißen) oder durch Aufschrumpfen erfolgen. Beim Aufschrumpfen der Nockenscheiben treten an deren Laufflächen Verformungen im Mikrobereich auf, die eine Nachbearbeitung erfordern können.

Aufgabe der Erfindung ist es, ein Verfahren sowie eine Vorrichtung zur Bearbeitung der Lauffläche von Nockenscheiben für gebaute Nockenwellen zu schaffen, mittels dem bzw. der ohne wesentlichen Mehraufwand eine Nachbearbeitung der Laufflächen der Nockenscheiben entfallen kann bzw. präzise Laufflächengeometrien einstellbar sind.

Diese Aufgabe wird mit den Merkmalen der unabhängigen Patentansprüche gelöst. Vorteilhafte Weiterbildungen sind Gegenstand der jeweiligen Unteransprüche.

Gemäß Anspruch 1 wird ein Verfahren zum Fertigen einer gebauten Nockenwelle, insbesondere für ventilgesteuerte Brennkraftmaschinen, vorgeschlagen, bei dem zumindest eine Nockenscheibe mit Grundkreisbereich und Nockenbereich an der Lauffläche mittels einer Laufflächen-Bearbeitungsvorrichtung bearbeitet wird, wobei die zumindest eine Nockenscheibe eine, zum Beispiel durch eine Bohrung gebildete Nockenscheiben-Ausnehmung aufweist, mittels der die Nockenscheibe auf eine korrespondierende und mit einer definierten maßlichen Überdeckung ausgeführte Welle aufgeschrumpft wird, zum Beispiel durch Abkühlen der Welle und Erwärmen der Nockenscheibe. Erfindungsgemäß wird vorgeschlagen, dass die wenigstens eine Nockenscheibe, zeitlich vor dem Aufschrumpfen auf die Welle, derart mittels einer Aufspannvorrichtung aufgespannt ist oder wird, dass auf den die Nockenscheiben-Ausnehmung definierenden Ausnehmungswandbereich der Nockenscheibe eine Spannkraft wirkt, die in einem vorgegebenen Maße dem Spannungs- und/oder Verformungszustand des Ausnehmungswandbereichs nach dem Aufschrumpfvorgang der Nockenscheibe auf die korrespondierende Welle entspricht. In diesem aufgespannten Zustand erfolgt dann, ebenfalls wiederum zeitlich vor dem Aufschrumpfen der wenigstens einen Nockenscheibe auf die Welle, eine Laufflächenbearbeitung der wenigstens einen Nockenscheibe.

Mit anderen Worten wird die Nockenscheibe durch das erfindungsgemäße Aufspannen somit quasi so vorgespannt bzw. verformt, wie dies beim späteren Aufschrumpfvorgang auf die Welle ebenfalls der Fall ist bzw. zumindest annähernd der Fall ist. Wird in diesem Zustand die Lauffläche der Nockenscheibe präzise auf die geforderte Oberflächenqualität und Geometrie endbearbeitet, insbesondere geschliffen, so liegt die so gefertigte Lauffläche auch nach dem Aufschrumpfen der Nockenscheibe vor. Eine weitere Nachbearbeitung ist somit nicht mehr erforderlich und kann eingespart werden.

Grundsätzlich könnte aber auch vorgesehen sein, dass die Spannkraft nicht exakt derjenigen nach dem Aufschrumpfvorgang auf die korrespondierende Welle entspricht, so zum Beispiel geringfügig geringer ist oder aber auch geringfügig größer ist. Dies hängt von den jeweiligen konkret vorliegenden Einsatzfällen ab.

Erfindungsgemäß weist die Aufspannvorrichtung ein Spannrohr auf, auf das die zumindest eine Nockenscheibe mit ihrer Nockenscheiben-Ausnehmung in einer Anlageverbindung aufgeschoben bzw. aufgefädelt wird. Dieses Spannrohr wird wenigstens im der Nockenscheiben-Ausnehmung zugeordneten Bereich dergestalt aufgeweitet, insbesondere elastisch aufgeweitet, dass bei einer durch entsprechende Kraftbeaufschlagung bewirkten und nach außen in Richtung Nockenscheibe gerichteten Aufweitung dieses Bereichs eine definierte Spannkraft auf den die Nockenscheiben-Ausnehmung begrenzenden Ausnehmungswandbereich der Nockenscheibe ausgeübt wird. Die Kraftbeaufschlagung erfolgt dabei hydraulisch über eine an das Spannrohr angeschlossene Hydraulikeinrichtung.

Gegebenenfalls kann die Aufspannvorrichtung, nämlich das Spannrohr der Aufspannvorrichtung, bei deren Aufspannung bzw. Aufweitung dergestalt gezielt beheizt werden, dass ihre vorzugsweise elastische Verformungsfähigkeit erhöht wird. Ferner können auch mehrere Nockenscheiben gleichzeitig aufgespannt und endbearbeitet werden, insbesondere diejenigen Nockenscheiben gleichzeitig auf einer Aufspannvorrichtung bearbeitet werden, die auf eine gemeinsame korrespondierende Welle aufgeschrumpft werden.

Des Weiteren kann die Aufspannvorrichtung so ausgeführt werden, dass diese, bezogen auf den Umfang des Ausnehmungswandbereiches, unterschiedlich verteilte Spannkräfte bzw. Werkstoffspannungen im Bereich der Nockenscheiben-Ausnehmung erzeugt. Damit gelingt es, Laufflächengeometrien bei der Endbearbeitung einzustellen, die nach dem Aufschrumpfvorgang gezielt ausgebildet sind und zum Beispiel Kantenträger bei der Betriebsbelastung ausschließen.

In einem weiteren, vorteilhaften Verfahrensschritt kann mittels temporär an der Aufspannvorrichtung anlegbarer Hilfsmittel wie Lehren, Anschläge oder dergl. die Nockenscheibe in einer definiert ausgerichteten Position gehalten werden, um zum Beispiel Winkelfehlern entgegenzuwirken.

Eine erfindungsgemäße Vorrichtung, insbesondere zur Bearbeitung der Lauffläche von Nockenscheiben für gebaute Nockenwellen und/oder zur Durchführung des erfindungsgemäßen Verfahrens, ist dadurch gekennzeichnet, dass die Vorrichtung eine Aufspannvorrichtung aufweist oder durch eine Aufspannvorrichtung gebildet ist, die wiederum so ausgebildet ist, dass auf dieser wenigstens eine, eine Nockenscheiben-Ausnehmung aufweisende und auf eine korrespondierende Welle aufschrumpfbare Nockenscheibe dergestalt aufspannbar ist, dass auf den die Nockenscheiben-Ausnehmung definierenden Ausnehmungswandbereich der Nockenscheibe eine Spannkraft wirkt, die in etwa bzw. in einem vorgegebenen Maße dem Spannungs- und/oder Verformungszustand des Ausnehmungswandbereichs nach dem Aufschrumpfvorgang der Nockenscheibe auf die korrespondierende Welle entspricht. Damit lassen sich die bereits zuvor ausführlich geschilderten Vorteile erzielen.

Erfindungsgemäß weist die Aufspannvorrichtung ein Spannrohr auf, auf das die zumindest eine Nockenscheibe mit ihrer Nockenscheiben-Ausnehmung aufschiebbar ist, wobei das Spannrohr wenigstens in dem der Nockenscheiben-Ausnehmung zugeordneten Bereich dergestalt aufweitbar ausgebildet ist, dass bei einer durch entsprechende Kraftbeaufschlagung, nämlich eine hydraulische Kraftbeaufschlagung, bewirkten und nach außen in Richtung Nockenscheibe gerichteten Aufweitung dieses Bereichs eine definierte Spannkraft auf einen die Nockenscheiben-Ausnehmung definierenden Ausnehmungswandbereich der Nockenscheibe ausübbar ist. Damit lässt sich der Aufspannvorgang funktionssicher und einfach durchführen. Die Aufweitung des Spannrohrs bzw. die Aufweitung des Aufweitungsbereichs des Spannrohrs erfolgt dabei vorzugsweise elastisch, d.h., dass sich der aufgeweitete Spannrohrbereich nach der Kraftbeaufschlagung wieder in die Ausgangslage zurückverlagert und für neue Anwendungen zur Verfügung steht.

Die erfindungsgemäße hydraulische, Aufspannvorrichtung sieht vor, dass das Spannrohr einseitig geschlossen ausgebildet ist, wobei dessen andere Stirnseite an eine, einen hohen isostatischen Druck erzeugende Druckmittelquelle angeschlossen ist. Das Spannrohr kann somit hier im elastischen Verformungsbereich durch ein Medium so aufgeweitet werden, dass der Nockenscheibe die dem Aufschrumpfvorgang vergleichbare Spannkraft bzw. Werkstoffspannung aufgeprägt wird.

Alternativ hierzu, aber nicht erfindungsgemäß kann die Aufspannvorrichtung auch mechanisch aufweitbar sein. Besonders bevorzugt können hierzu innerhalb des Spannrohrs zwei gegenläufig beaufschlagbare Außenkonen vorgesehen sein, die mit korrespondierenden Innenkonen des Spannrohrs zusammenwirken. Das Spannrohr kann dann durch Relativbewegung der beiden Außenkonen gezielt aufgeweitet werden, wobei die erforderlichen, hohen Stellkräfte innere Kräfte sind, die günstig in der Bearbeitungsstation zum Beispiel hydraulisch aufbringbar bzw. abstützbar sind.

Dabei können in einer besonders einfachen Ansteuerung die Außenkonen an Zug- bzw. Druckstangen angeordnet sein. Die Zugstange kann zudem innerhalb des Spannrohrs in der koaxialen, rohrförmigen Druckstange axial verschiebbar geführt sein. Die Außenkonen können somit von der einen Stirnseite des Spannrohrs aus betätigt werden.

Das Spannrohr ist ferner erfindungsgemäß in seiner Wandstärke in Umfangsrichtung und vorzugsweise auch in Axialrichtung mit unterschiedlicher Wandstärke ausgeführt, um unterschiedlich verteilte Spannkräfte bzw. Werkstoffspannungen zu generieren.

Das Spannrohr ist bevorzugt einer zum Beispiel durch eine Schleifvorrichtung gebildeten Laufflächen-Bearbeitungsvorrichtung bzw. -station zur Endbearbeitung der Lauffläche der Nockenscheibe (oder mehrerer Nockenscheiben) zugeordnet bzw. an dieser angebaut bzw. Bestandteil derselben.

Eine besonders bevorzugte Anwendung des Verfahrens und einer diesbezüglichen Aufspannvorrichtung besteht in der Fertigung gebauter Nockenwellen für Brennkraftmaschinen von Kraftfahrzeugen, insbesondere von Nutzfahrzeugen.

Zwei Ausführungsbeispiele der Erfindung sind anhand der beigefügten, schematischen Zeichnung beispielhaft näher erläutert.

Es zeigen:
- Fig. 1: in vereinfachter Darstellung die Einzelteile einer gebauten Nockenwelle mit einer rohrförmigen Welle und einer Nockenscheibe;
- Fig. 2: die gebaute Nockenwelle mit der auf die Welle aufgeschrumpften Nockenscheibe in einem Querschnitt gemäß Linie II - II der Fig. 3;
- Fig. 3: die gebaute Nockenwelle in einem Längsschnitt entlang der Linie III - III der Fig. 2;
- Fig. 4: eine Aufspannvorrichtung mit einem hydraulisch aufweitbaren Spannrohr zum Bearbeiten der Lauffläche der Nockenscheibe der gebauten Nockenwelle; und
- Fig. 5: eine weitere nicht erfindungsgemäße Aufspannvorrichtung mit einem mechanisch über Konen aufweitbaren Spannrohr.

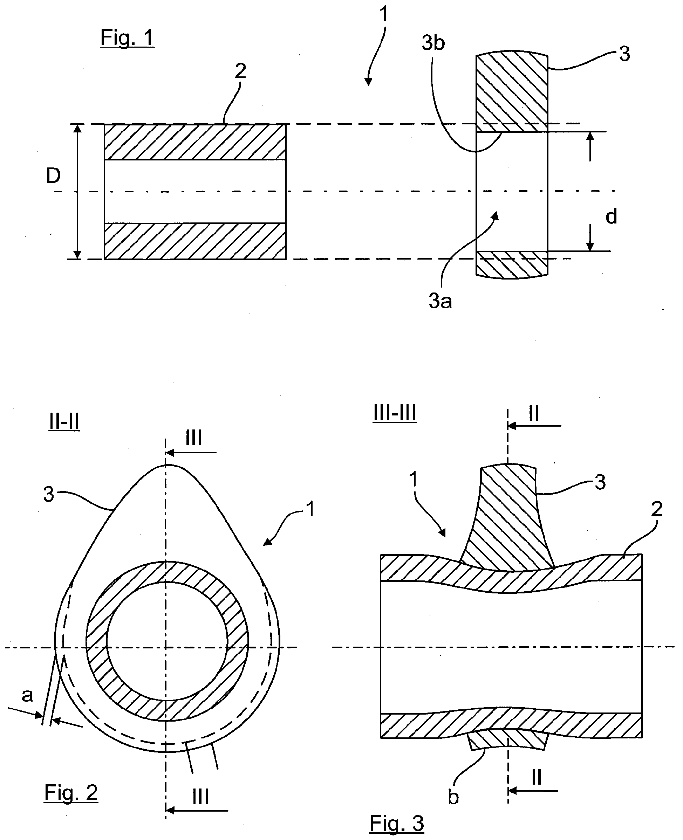

In der Fig. 1 sind grob schematisch und nur abschnittsweise eine Welle 2 und eine einzelne Nockenscheibe 3 einer gebauten Nockenwelle 1 für Brennkraftmaschinen insbesondere für Kraftfahrzeuge bzw. Nutzfahrzeuge dargestellt, wobei die Nockenscheibe 3 wie in den Fig. 2 und 3 ersichtlich ist auf die Welle 2 aufgeschrumpft ist.

Dazu ist die hier beispielhaft rohrförmig ausgebildete Welle 2, die zum Beispiel aus Stahl oder Leichtmetall gefertigt ist, mit ihrem Außendurchmesser D in maßlicher Überdeckung zum Innendurchmesser d der zum Beispiel werkstoffgleichen Nockenscheibe 3 gefertigt. Die Nockenscheibe 3 weist eine durch einen Ausnehmungswandbereich 3b begrenzte und bevorzugt durch eine Bohrung gebildete Nockenscheiben-Ausnehmung 3a auf. Das Aufschrumpfen erfolgt durch entsprechende Temperierung von Nockenscheibe 3 und Welle 2, zum Beispiel durch Abkühlen der Welle 2 und gleichzeitiges Erwärmen der Nockenscheibe 3, und durch anschließendes Auffädeln der Nockenscheibe 3 oder mehrerer Nockenscheiben 3 auf die Welle. Nach Angleichung der Temperatur von Welle 2 und Nockenscheibe 3 liegt eine fertig gebaute Nockenwelle 1 mit definierter Nockenlaufflächengeometrie vor.

Die Fig. 2 und 3 zeigen stark übertrieben die beim Aufschrumpfen durch die auftretenden Werkstoffspannungen bei Temperaturangleichung der Bauteile 2, 3 möglichen Verformungen, die insbesondere im Nockengrundkreisbereich der Nockenscheibe 3 (geringere Wandstärke) auftreten können und zum Beispiel zu einem Hub-kurvenfehler a (Fig. 2, gestrichelt angedeutet) oder zu einer im Querschnitt betrachtet konkaven Lauffläche b (Fig. 3) mit der Gefahr von Kantenträgern führen können.

Daraus resultierend müsste die Lauffläche der Nockenscheibe 3, an der im Betrieb der Brennkraftmaschine ein Ventilbetätigungselement wie ein Kipphebel, eine Kipphebelrolle, ein Tassenstößel, etc. anläuft nachbearbeitet, insbesondere nachgeschliffen werden, um bevorzugt eine geringfügig ballige Lauffläche und eine genau definierte Nockengeometrie sicherzustellen.

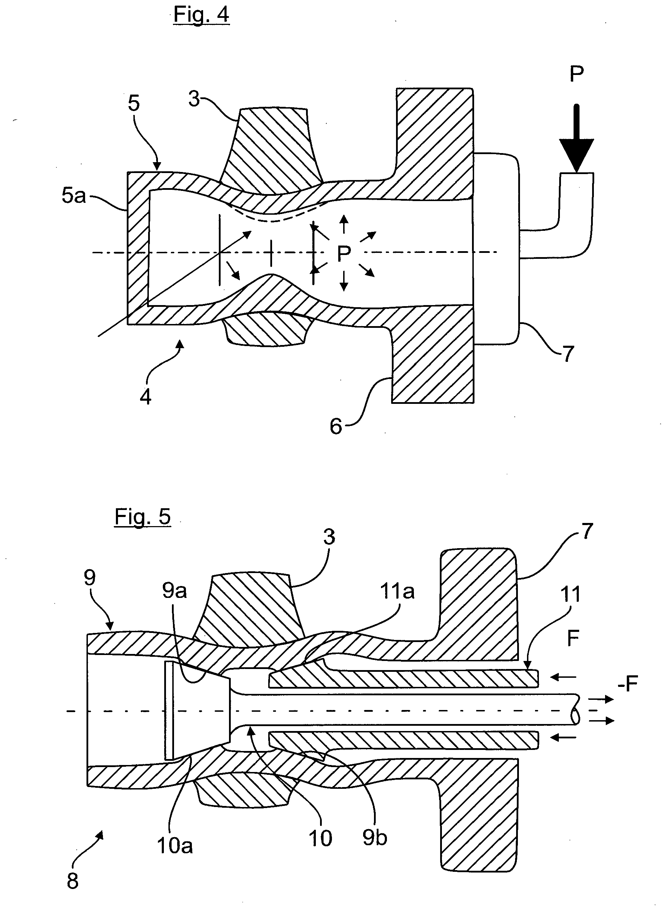

Um die in den Fig. 2 und 3 übertrieben dargestellten Verformungen der Nockenscheibe 3 bzw. deren Lauffläche zu vermeiden, wird bei der Fertigung der Nockenscheibe 3 eine in der Fig. 4 dargestellte Aufspannvorrichtung 4 verwendet, die zum Beispiel Bestandteil bzw. ein Funktionsteil einer nicht dargestellten Laufflächen-Bearbeitungsvorrichtung bzw. -station bildet, in der die Lauffläche der Nockenscheibe 3 endbearbeitet, insbesondere geschliffen wird. Die Laufflächen-Bearbeitungsvorrichtung kann zum Beispiel in bevorzugter Weise durch eine Schleifmaschine, insbesondere durch eine Konturschleifmaschine, gebildet sein.

Die Aufspannvorrichtung 4 weist ein bevorzugt dünnwandig und/oder metallisch ausgebildetes Spannrohr 5 mit einem angeformten Befestigungsflansch 6 auf, über den es an die Laufflächen-Bearbeitungsvorrichtung anschließbar ist.

Das Spannrohr 5 ist an seiner einen Stirnseite 5a geschlossen und zum Befestigungsflansch 6 hin offen ausgeführt und kann durch den Befestigungsflansch 6 hindurch über einen Druckanschluss 7 mit Hydraulikmedium hohen isostatischen Drucks (Pfeile P) beaufschlagt werden.

Das Spannrohr 5 kann wie im Ausführungsbeispiel gezeigt eine unterschiedliche Wandstärke aufweisen und erfindungsgemäß auch mit in Umfangsrichtung (gestrichelt angedeutet) unterschiedlicher Wandstärke (unrund) ausgeführt sein, um die gewünschten Verformungen zu erzeugen.

Zur Bearbeitung der Lauffläche der Nockenscheibe 3 wird diese auf das am Außenumfang zylindrisch ausgeführte Spannrohr 5 aufgeschoben, wobei gegebenenfalls Hilfsmittel wie Lehren oder Anschläge vorgesehen sein können (nicht dargestellt), mittels denen die Nockenscheibe 3 gezielt auf dem Spannrohr 5 positioniert wird.

Anschließend wird das Spannrohr 5 durch den Befestigungsflansch 6 hindurch mit hohem hydraulischen Druck P beaufschlagt und demzufolge im elastischen Verformungsbereich aufgeweitet, wobei das Spannrohr 5 so ausgebildet ist, dass dabei auf die Nockenscheibe 3 eine nach außen gerichtete Werkstoffspannung bzw. Verformung im Mikrobereich ausgeübt wird, wie diese auch beim späteren Aufschrumpfen der Nockenscheibe 3 auf die Welle 2 entstehen wird. Durch den Hydraulikdruck wird das Spannrohr 5 somit wenigstens im der Nockenscheiben-Ausnehmung 3a der wenigstens einen Nockenscheibe 3 zugeordneten Bereich dergestalt aufgeweitet, insbesondere elastisch aufgeweitet, dass dieses eine definierte Spannkraft auf den die Nockenscheiben-Ausnehmung 3a begrenzenden Ausnehmungswandbereich 3b der Nockenscheibe 3 ausübt, die in einem vorgegebenen Maße, bevorzugt in etwa genau, dem Spannungs- und/oder Verformungszustand des Ausnehmungswandbereichs 3b nach dem Aufschrumpfvorgang der Nockenscheibe 3 auf die korrespondierende Welle 2 entspricht.

Die Fig. 4 zeigt diesen Vorspannzustand des Spannrohrs 5 auf die Nockenscheibe 3 stark übertrieben, selbstverständlich ist dieser nur mit dem Auge nicht feststellbar.

In diesem Vorspannzustand ist die Nockenscheibe 3 reibschlüssig auf dem Spannrohr befestigt und es kann ihre Lauffläche auf der Bearbeitungsstation endbearbeitet bzw. geschliffen werden, wobei die durch das spätere Aufschrumpfen der Nockenscheibe 3 auf die Welle 2 auftretenden Mikroverformungen bereits berücksichtigt sind.

Nach dem Aufschrumpfen ist die konstruktiv gewünschte Laufflächengeometrie und -qualität bereits vorhanden, so dass keine Nachbearbeitung erforderlich ist.

Die Fig. 5 zeigt eine zur Fig. 4 alternative nicht erfindungsgemäße Aufspannvorrichtung 8, die nur soweit beschrieben ist, als sie sich wesentlich von der Spannvorrichtung 4 unterscheidet. Funktionell gleiche Teile sind mit gleichen Bezugszeichen versehen.

Gemäß Fig. 5 ist das Spannrohr 9 mechanisch im elastischen Verformungsbereich aufweitbar, wobei dazu durch den Befestigungsflansch 6 hindurch eine Zugstange 10 und eine Druckstange 11 in das Spannrohr 9 einragen.

Die Zugstange 10 trägt im Aufspannbereich für die Nockenscheibe 3 einen Außenkonus 10a und ist in der rohrförmig ausgebildeten, koaxialen Druckstange 11 geführt, die ebenfalls wie ersichtlich einen gegenüber positionierten Außenkonus 11a trägt.

Die Außenkonen 10a, 11a wirken mit in dem Spannrohr 9 ausgebildeten Innenkonen 9a, 9b derart zusammen, dass durch gegensinniges Beaufschlagen der Außenkonen 10a, 11a über die Zugstange 10 und die Druckstange 11 mit einer Kraft F bzw. -F das Spannrohr 9 wie vorbeschrieben gezielt aufgeweitet wird.

Die relativ hohe Kraft F kann über die Bearbeitungsstation hydraulisch (Kolben-Zylinder-Einheit) oder mechanisch zum Beispiel über eine Exzentereinheit aufgebracht werden und bildet eine innere Kraft. Zum Beispiel kann die Zugstange 10 an einen Hydraulikkolben und die Druckstange 11 an den Zylinder der Einheit oder umgekehrt angeschlossen sein.

Der Bearbeitungsablauf ist wie zur Fig. 4 beschrieben und ermöglicht ebenfalls eine Endbearbeitung der Nockenscheibe 3, die demzufolge keine Nachbearbeitung nach dem Aufschrumpfen der Nockenscheibe 3 auf die Welle 2 erfordert.

Das Spannrohr 5 bzw. 9 kann so ausgeführt sein, dass mehrere Nockenscheiben 3 gleichzeitig in der Bearbeitungsvorrichtung bearbeitet werden können. Ferner kann gegebenenfalls eine Heizeinrichtung vorgesehen sein, die durch temporäre Beheizung des Spannrohrs 5 oder 9 dessen gezielte Aufweitung begünstigt.

Die gebauten Nockenwellen 1 können bevorzugt zur Ventilsteuerung von Brennkraftmaschinen für Kraftfahrzeuge, insbesondere Nutzfahrzeuge eingesetzt sein; es können aber auch andere Nockenwellen, beispielsweise für Kraftstoff-Einspritzpumpen, etc. entsprechend ausgeführt sein.

### BEZUGSZEICHENLISTE

- 1: Nockenwelle
- 2: Welle
- 3: Nockenscheibe
- 3a: Nockenscheiben-Ausnehmung
- 3b: Ausnehmungswandbereich
- 4: Aufspannvorrichtung
- 5: Spannrohr
- 5a: Stirnseite
- 6: Befestigungsflansch
- 7: Druckanschluss
- 8: Spannvorrichtung
- 9: Spannrohr
- 9a: Innenkonus
- 9b: Innenkonus
- 10: Druckstange
- 10a: Außenkonus
- 11: Zugstange
- 11a: Außenkonus

## Patentansprüche

1. Verfahren zum Fertigen einer gebauten Nockenwelle (1), insbesondere für ventilgesteuerte Brennkraftmaschinen, bei dem zumindest eine Nockenscheibe (3) mit Grundkreisbereich und Nockenbereich mittels einer Laufflächen-Bearbeitungsvorrichtung an der Lauffläche bearbeitet wird, wobei die zumindest eine Nockenscheibe (3) eine Nockenscheiben-Ausnehmung (3a) aufweist, mittels der die Nockenscheibe (3) auf eine korrespondierende und mit einer definierten maßlichen Überdeckung ausgeführte Welle (2) aufgeschrumpft wird wobei die wenigstens eine Nockenscheibe (3), zeitlich vor dem Aufschrumpfen auf die Welle (2), mittels einer Aufspannvorrichtung (4) derart aufgespannt wird, dass auf den die Nockenscheiben-Ausnehmung (3a) definierenden Ausnehmungswandbereich (3b) der Nockenscheibe (3) eine Spannkraft wirkt, die in einem vorgegebenen Maße dem Spannungs- und/oder Verformungszustand des Ausnehmungswandbereichs (3b) nach dem Aufschrumpfvorgang der Nockenscheibe (3) auf die korrespondierende Welle (2) entspricht, und dass die Laufflächenbearbeitung der wenigstens einen Nockenscheibe (3) im mittels der Aufspannvorrichtung (4) aufgespannten Zustand erfolgt, **dadurch gekennzeichnet,**
**dass** die Aufspannvorrichtung (4) ein Spannrohr (5) aufweist, auf das die zumindest eine Nockenscheibe (3) mit ihrer Nockenscheiben-Ausnehmung (3a) aufgeschoben wird, wobei das Spannrohr (5) wenigstens im der Nockenscheiben-Ausnehmung (3a) zugeordneten Bereich dergestalt aufgeweitet wird, dass bei einer durch entsprechende Kraftbeaufschlagung bewirkten und nach außen in Richtung Nockenscheibe (3) gerichteten Aufweitung dieses Bereichs die definierte Spannkraft auf den die Nockenscheiben-Ausnehmung (3a) begrenzenden Ausnehmungswandbereich (3b) der Nockenscheibe (3) ausgeübt wird,
**dass** das Spannrohr (5) einseitig geschlossen ausgebildet ist und an dessen anderer Stirnseite (7) an eine einen hohen Druck erzeugende Druckmittelquelle angeschlossen ist, so dass das Spannrohr (5) zu dessen Aufweitung mit einem definiert hohen hydraulischen Druck (P) beaufschlagt wird, und
**dass** das Spannrohr (5), um die gewünschten Verformungen zu erzeugen, in Umfangsrichtung mit unterschiedlicher Wandstärke ausgeführt ist, dergestalt, dass das Spannrohr (5) am Innenumfang unrund und am Außenumfang zylindrisch ausgeführt ist.

2. Verfahren nach Anspruch 1, **dadurch gekennzeichnet, dass** die Aufspannvorrichtung (4), insbesondere ein Spannrohr (5) der Aufspannvorrichtung (4), während des Aufspannvorgangs beheizt wird.

3. Verfahren nach Anspruch 1 oder 2, **dadurch gekennzeichnet, dass** mehrere Nockenscheiben (3) gleichzeitig auf einer Aufspannvorrichtung (4) bearbeitet werden, insbesondere diejenigen Nockenscheiben (3) gleichzeitig auf einer Aufspannvorrichtung (4) bearbeitet werden, die auf eine gemeinsame korrespondierende Welle (2) aufgeschrumpft werden.

4. Verfahren nach einem der vorhergehenden Ansprüche, **dadurch gekennzeichnet, dass** die Aufspannvorrichtung (4) so ausgeführt ist, dass über den Umfang des Ausnehmungswandbereiches (3b) unterschiedlich verteilte Spannkräfte erzeugt werden.

5. Verfahren nach einem der vorhergehenden Ansprüche, **dadurch gekennzeichnet, dass** mittels temporär an der Aufspannvorrichtung (4) anlegbarer Hilfsmittel die Nockenscheibe (3) in einer definiert ausgerichteten Position gehalten wird.

6. Vorrichtung, insbesondere zur Bearbeitung der Lauffläche von Nockenscheiben für gebaute Nockenwellen, wobei die Vorrichtung eine Aufspannvorrichtung (4) aufweist oder durch eine Aufspannvorrichtung (4) gebildet ist, auf der wenigstens eine, eine Nockenscheiben-Ausnehmung (3a) aufweisende und auf eine korrespondierende Welle (2) aufschrumpfbare Nockenscheibe (3) dergestalt aufspannbar ist, dass auf den die Nockenscheiben-Ausnehmung (3a) definierenden Ausnehmungswandbereich (3b) der Nockenscheibe (3) eine Spannkraft wirkt, die in einem vorgegebenen Maße dem Spannungs- und/oder Verformungszustand des Ausnehmungswandbereichs (3b) nach dem Aufschrumpfvorgang der Nockenscheibe (3) auf die korrespondierende Welle (2) entspricht, **dadurch gekennzeichnet,**
**dass** die Aufspannvorrichtung (4) ein Spannrohr (5) aufweist, auf das die zumindest eine Nockenscheibe (3) mit ihrer Nockenscheiben-Ausnehmung (3a) aufschiebbar ist, wobei das Spannrohr (5) wenigstens im der Nockenscheiben-Ausnehmung (3a) zugeordneten Bereich dergestalt aufweitbar ausgebildet ist, dass bei einer durch entsprechende Kraftbeaufschlagung bewirkten und nach außen in Richtung Nockenscheibe (3) gerichteten Aufweitung dieses Bereichs die definierte Spannkraft auf den die Nockenscheiben-Ausnehmung (3a) begrenzenden Ausnehmungswandbereich (3b) der Nockenscheibe (3) ausübbar ist,
**dass** das Spannrohr (5) einseitig geschlossen ausgebildet ist und an dessen anderer Stirnseite (7) an eine einen hohen Druck erzeugende Druckmittelquelle angeschlossen ist, so dass das Spannrohr (5) zu dessen Aufweitung mit einem definiert hohen hydraulischen Druck (P) beaufschlagt wird, und
**dass** das Spannrohr (5), um die gewünschten Verformungen zu erzeugen, in Umfangsrichtung mit unterschiedlicher Wandstärke ausgeführt ist, dergestalt, dass das Spannrohr (5) am Innenumfang unrund und am Außenumfang zylindrisch ausgeführt ist.

7. Vorrichtung nach Anspruch 6, **dadurch gekennzeichnet, dass** eine Heizeinrichtung vorgesehen ist, mittels der die Aufspannvorrichtung (4), insbesondere ein Spannrohr (5) der Aufspannvorrichtung (4), beheizbar ist.

8. Vorrichtung nach Anspruch 6 oder 7, **dadurch gekennzeichnet, dass** das Spannrohr (5) in seiner Wandstärke in Axialrichtung mit unterschiedlicher Wandstärke ausgeführt ist.

9. Vorrichtung nach einem der Ansprüche 6 bis 8, **dadurch gekennzeichnet, dass** das Spannrohr (5) einer, insbesondere durch eine Schleifvorrichtung gebildeten, Laufflächen-Bearbeitungsvorrichtung zur Endbearbeitung der Lauffläche der wenigstens einen Nockenscheibe (3) zugeordnet ist und/oder Bestandteil derselben bildet.

10. Anwendung des Verfahrens nach einem der Ansprüche 1 bis 5 und einer Vorrichtung (4) nach einem der Ansprüche 6 bis 9 zur Fertigung einer gebauten Nockenwelle (1) für Brennkraftmaschinen von Kraftfahrzeugen, insbesondere von Nutzfahrzeugen.

## Claims

1. Method for manufacturing an assembled camshaft (1), in particular for valve-controlled internal combustion engines, in the case of which method at least one cam plate (3) with a base circle region and a cam region is machined on the running face by means of a running-face machining apparatus, the at least one cam plate (3) having a cam-plate recess (3a), by means of which the cam plate (3) is shrink-fitted onto a corresponding shaft (2) which is configured with a defined dimensional overlap, the at least one cam plate (3) being clamped by means of a clamping apparatus (4), temporally before the shrink-fitting onto the shaft (2), in such a way that a clamping force acts on that recess wall region (3b) of the cam plate (3) which defines the cam-plate recess (3a), which clamping force corresponds to a predefined extent to the clamping and/or deformation state of the recess wall region (3b) after the shrink-fitting operation of the cam plate (3) onto the corresponding shaft (2), and in that the running-face machining of the at least one cam plate (3) takes place in the state, in which it is clamped by means of the clamping apparatus (4), **characterized in that** the clamping apparatus (4) has a clamping tube (5), onto which the at least one cam plate (3) is pushed with its cam-plate recess (3a), the clamping tube (5) being widened at least in the region which is assigned to the cam-plate recess (3a), in such a way that, in the case of widening of the said region, which widening is brought about by way of corresponding force loading and is directed outwards in the direction of the cam plate (3), the defined clamping force is exerted onto that recess wall region (3b) of the cam plate (3) which delimits the cam-plate recess (3a), **in that** the clamping tube (5) is configured so as to be closed on one side, and is connected on its other end side (7) to a pressure medium source which generates a high pressure, with the result that the clamping tube (5) is loaded with a defined high hydraulic pressure (P) in order to widen it, and **in that**, in order to produce the desired deformations, the clamping tube (5) is configured with a differing wall thickness in the circumferential direction, in such a way that the clamping tube (5) is of non-round configuration on the inner circumference and of cylindrical configuration on the outer circumference.

2. Method according to Claim 1, **characterized in that** the clamping apparatus (4), in particular a clamping tube (5) of the clamping apparatus (4), is heated during the clamping operation.

3. Method according to Claim 1 or 2, **characterized in that** a plurality of cam plates (3) are machined at the same time on one clamping apparatus (4), in particular those cam plates (3) are machined at the same time on one clamping apparatus (4) which are shrink-fitted onto a common corresponding shaft (2).

4. Method according to one of the preceding claims, **characterized in that** the clamping apparatus (4) is configured in such a way that clamping forces are generated which are distributed in a differing manner over the circumference of the recess wall region (3b).

5. Method according to one of the preceding claims, **characterized in that** the cam plate (3) is held in a position which is oriented in a defined manner, by means of tools which can bear temporarily against the clamping apparatus (4).

6. Apparatus, in particular for machining the running face of cam plates for assembled camshafts, the apparatus having a clamping apparatus (4) or being formed by way of a clamping apparatus (4), on which at least one cam plate (3) which has a cam-plate recess (3a) and can be shrink-fitted onto a corresponding shaft (2) can be clamped in such a way that a clamping force acts on that recess wall region (3b) of the cam plate (3) which defines the cam-plate recess (3a), which clamping force corresponds to a predefined extent to the clamping and/or deformation state of the recess wall region (3b) after the shrink-fitting operation of the cam plate (3) onto the corresponding shaft (2), **characterized in that** the clamping apparatus (4) has a clamping tube (5), onto which the at least one cam plate (3) can be pushed with its cam-plate recess (3a), the clamping tube (5) being configured such that it can be widened at least in the region which is assigned to the cam-plate recess (3a), in such a way that, in the case of widening of said region, which widening is brought about by way of corresponding force loading and is directed towards the outside in the direction of the cam plate (3), the defined clamping force can be exerted on that recess wall region (3b) of the cam plate (3) which delimits the cam-plate recess (3a), **in that** the clamping tube (5) is configured so as to be closed on one side, and is connected on its other end side (7) to a pressure medium source which generates a high pressure, with the result that the clamping tube (5) is loaded with a defined high hydraulic pressure (P) in order to widen it, and **in that**, in order to produce the desired deformations, the clamping tube (5) is configured with a different wall thickness in the circumferential direction, in such a way that the clamping tube (5) is of non-round configuration on the inner circumference and of cylindrical configuration on the outer circumference.

7. Apparatus according to Claim 6, **characterized in that** a heating device is provided, by means of which the clamping apparatus (4), in particular a clamping tube (5) of the clamping apparatus (4), can be heated.

8. Apparatus according to Claim 6 or 7, **characterized in that**, in terms of its wall thickness, the clamping tube (5) is configured with a differing wall thickness in the axial direction.

9. Apparatus according to one of Claims 6 to 8, **characterized in that** the clamping tube (5) is assigned to a running-face machining apparatus which is formed, in particular, by way of a grinding apparatus for final machining of the running face of the at least one cam plate (3), and/or the said clamping tube (5) forms a constituent part of the said running-face machining apparatus.

10. Use of the method according to one of Claims 1 to 5 and an apparatus (4) according to one of Claims 6 to 9 for manufacturing an assembled camshaft (1) for internal combustion engines of motor vehicles, in particular of commercial vehicles.

## Revendications

1. Procédé de fabrication d'un arbre à cames installé (1), en particulier pour des moteurs à combustion interne à commande par soupapes, dans lequel au moins un disque de cames (3) avec une région de cercle de base et une région de came est usiné au niveau de la surface de roulement au moyen d'un dispositif d'usinage de surface de roulement, l'au moins un disque de cames (3) présentant un évidement de disque de cames (3a) au moyen duquel le disque de cames (3) est emmanché par frettage sur un arbre correspondant (2) réalisé avec un recouvrement dimensionnel défini et l'au moins un disque de cames (3), avant l'emmanchement par frettage sur l'arbre (2), étant serré au moyen d'un dispositif de serrage (4) de telle sorte qu'une force de serrage agisse sur la région de paroi d'évidement (3b) du disque de cames (3) définissant l'évidement de disque de cames (3a), laquelle force de serrage correspond dans une mesure prédéfinie à l'état de serrage et/ou de déformation de la région de paroi d'évidement (3b) après l'opération d'emmanchement par frettage du disque de cames (3) sur l'arbre correspondant (2), et que l'usinage de surface de roulement de l'au moins un disque de cames (3) s'effectue dans l'état serré au moyen du dispositif de serrage (4), **caractérisé**
**en ce que** le dispositif de serrage (4) présente un tube de serrage (5) sur lequel est poussé l'au moins un disque de cames (3) avec son évidement de disque de cames (3a), le tube de serrage (5) étant élargi au moins dans la région tournée vers l'évidement de disque de cames (3a), de telle sorte que lors d'un élargissement de cette région provoqué par une sollicitation par une force correspondante et orienté vers l'extérieur dans la direction du disque de cames (3), la force de serrage définie soit exercée sur la région de paroi d'évidement (3b) du disque de cames (3) délimitant l'évidement de disque de cames (3a),
**en ce que** le tube de serrage (5) est réalisé sous forme fermée d'un côté et est raccordé au niveau de son autre côté frontal (7) à une source de fluide sous pression générant une haute pression de telle sorte que le tube de serrage (5), pour son élargissement, soit sollicité avec une pression hydraulique élevée définie (P), et
**en ce que** le tube de serrage (5), afin de générer les déformations souhaitées, est réalisé dans la direction périphérique avec une épaisseur de paroi différente de telle sorte que le tube de serrage (5) soit réalisé au niveau de la périphérie intérieure de manière non circulaire et de manière cylindrique au niveau de la périphérie extérieure.

2. Procédé selon la revendication 1, **caractérisé en ce que** le dispositif de serrage (4), en particulier un tube de serrage (5) du dispositif de serrage (4), est chauffé pendant l'opération de serrage.

3. Procédé selon la revendication 1 ou 2, **caractérisé en ce que** plusieurs disques de cames (3) sont usinés simultanément sur un dispositif de serrage (4), en particulier les disques de cames (3) qui sont emmanchés par frettage sur un arbre correspondant commun (2) sont usinés simultanément sur un dispositif de serrage (4).

4. Procédé selon l'une quelconque des revendications précédentes, **caractérisé en ce que** le dispositif de serrage (4) est réalisé de telle sorte que des forces de serrage réparties différemment soient générées sur la périphérie de la région de paroi d'évidement (3b).

5. Procédé selon l'une quelconque des revendications précédentes, **caractérisé en ce que** le disque de cames (3) est maintenu dans une position orientée de manière définie à l'aide de moyens auxiliaires pouvant être appliqués temporairement sur le dispositif de serrage (4).

6. Dispositif, en particulier pour l'usinage de la surface de roulement de disques de cames pour des arbres à cames installés, le dispositif présentant un dispositif de serrage (4) ou étant formé par un dispositif de serrage (4) sur lequel peut être serré un disque de cames (3) présentant un évidement de disque de cames (3a) et pouvant être emmanché par frettage sur un arbre correspondant (2) de telle sorte que sur la région de paroi d'évidement (3b) du disque de cames (3) définissant l'évidement de disque de cames (3a) agisse une force de serrage qui correspond dans une mesure prédéfinie à l'état de serrage et/ou de déformation de la région de paroi d'évidement (3b) après l'opération d'emmanchement par frettage du disque de cames (3) sur l'arbre correspondant (2), **caractérisé**
**en ce que** le dispositif de serrage (4) présente un tube de serrage (5) sur lequel l'au moins un disque de cames (3) peut être poussé avec son évidement de disques de cames (3a), le tube de serrage (5) étant réalisé de manière à pouvoir être élargi dans la région associée à l'évidement de disque de cames (3a) de telle sorte que lors d'un élargissement de cette région provoqué par une sollicitation par une force correspondante et orienté vers l'extérieur dans la direction du disque de cames (3), la force de serrage définie puisse être exercée sur la région de paroi d'évidement (3b) du disque de cames (3) délimitant l'évidement de disque de cames (3a),
**en ce que** le tube de serrage (5) est réalisé sous forme fermée d'un côté et est raccordé au niveau de son autre côté frontal (7) à une source de fluide sous pression générant une haute pression de telle sorte que le tube de serrage (5), pour son élargissement, soit sollicité avec une pression hydraulique élevée définie (P), et
**en ce que** le tube de serrage (5), afin de générer les déformations souhaitées, est réalisé dans la direction périphérique avec une épaisseur de paroi différente de telle sorte que le tube de serrage (5) soit réalisé au niveau de la périphérie intérieure de manière non circulaire et de manière cylindrique au niveau de la périphérie extérieure.

7. Dispositif selon la revendication 6, **caractérisé en ce qu**'un dispositif de chauffage est prévu, au moyen duquel le dispositif de serrage (4), en particulier un tube de serrage (5) du dispositif de serrage (4), peut être chauffé.

8. Dispositif selon la revendication 6 ou 7, **caractérisé en ce que** le tube de serrage (5), dans son épaisseur de paroi, est réalisé dans la direction axiale avec une épaisseur de paroi différente.

9. Dispositif selon l'une quelconque des revendications 6 à 8, **caractérisé en ce que** le tube de serrage (5) est associé à un dispositif d'usinage de surface de roulement formé notamment par un dispositif de meulage pour l'usinage de finition de la surface de roulement de l'au moins un disque de cames (3) et/ou forme un constituant de celui-ci.

10. Utilisation du procédé selon l'une quelconque des revendications 1 à 5 et d'un dispositif (4) selon l'une quelconque des revendications 6 à 9 pour la fabrication d'un arbre à cames installé (1) pour des moteurs à combustion interne de véhicules automobiles, en particulier de véhicules utilitaires.
